# EUROPÄISCHE PATENTSCHRIFT

(11) **EP 3 005 130 B1**
(45) Veröffentlichungstag und Bekanntmachung des Hinweises auf die Patenterteilung: **03.01.2018**
(21) Anmeldenummer: 14728853.4
(22) Anmeldetag: 19.05.2014
(51) Int. Cl.: G06F 13/38, G06F 9/44, G06F 1/16, G06F 13/40

(54) **VORRICHTUNG, SYSTEM UND VERFAHREN ZUM UNTERSTÜTZEN DER EINRICHTUNG EINES LOKALEN NETZWERKS**
DEVICE, SYSTEM AND METHOD FOR SUPPORTING THE SETUP OF A LOCAL NETWORK
DISPOSITIF, SYSTEME ET PROCEDE DE SOUTIEN À LA CRÉATION D'UN RESEAU LOCAL

(30) Priorität: 05.06.2013 DE 102013105799
(43) Veröffentlichungstag der Anmeldung: 13.04.2016
(73) Patentinhaber: Deutsche Post AG, 53113 Bonn (DE)
(72) Erfinder: PERSCH, Christian, 61267 Neu-Anspach (DE)
(74) Vertreter: Cohausz & Florack
(86) Internationale Anmeldenummer: PCT/EP2014/060233
(87) Internationale Veröffentlichungsnummer: WO 2014/195121

(56) Entgegenhaltungen:
- US-A1- 2006 094 936
- US-A1- 2013 111 096
- US-B1- 6 917 280
- US-B1- 6 948 006

## Beschreibung

### GEBIET DER ERFINDUNG

Die Erfindung betrifft unter anderem eine Vorrichtung, ein System und ein Verfahren, die das Einrichten eines lokalen Netzwerks unterstützen.

### HINTERGRUND DER ERFINDUNG

In manchen Umgebungen wird eingesetzte Informationstechnik (IT) von verschiedenen Seiten betreut. Die Informationstechnik kann dabei zum Beispiel Computer, Software, Peripheriegeräte, sowie einen Anschluss an das Internet umfassen.

So können beispielsweise in einer Einzelhandelsniederlassung mit vorhandener Informationstechnik zusätzlich Dienstleistungen eines anderen Unternehmens angeboten werden, etwa indem nebenbei eine Postagentur oder eine Lottoannahmestelle betrieben wird. Für solche Dienstleistungen ist in der Regel zumindest eine eigene Software des anderen Unternehmens erforderlich.

Ein Installieren der Software des anderen Unternehmens auf einem für den Einzelhandel vorhandenen Computer kommt dabei häufig nicht in Betracht, da dies in manchen Fällen mit einem Sicherheitsrisiko verbunden sein kann.

Stattdessen könnte ein für den Einzelhandel vorhandener Computer über das Internet an einen von einem gesicherten, zentralen Server des anderen Unternehmens bereitgestellten Webdienst angebunden werden. Zum einen erfordert dies jedoch in der Regel eine komplexe Konfiguration des Computers. Die hierzu erforderlichen Kenntnisse sind vor Ort möglicherweise nicht vorhanden, und das Entsenden von Fachpersonal für die Konfiguration ist kostenintensiv. Die Nutzung eines Webdienstes ermöglicht zum anderen keinen Offline-Betrieb. Das heißt, die Dienstleistungen können nicht angeboten werden, wenn der Server oder der Zugang zum Internet ausfällt.

Um einen unterbrechungsfreien Betrieb zu gewährleisten, werden daher herkömmlicherweise zwei vollständige Computersysteme nebst Peripherie betrieben. Dies ist jedoch ebenfalls mit hohen Kosten verbunden und nimmt zusätzlichen Platz in Anspruch. US 6 948 006 B1 offenbart eine Vorrichtung der einen Treiber speichert der in einer externen Vorrichtung geladen wird um die externe Vorrichtung zu veranlassen, den Treiber in der externen Vorrichtung zu installieren.

### ALLGEMEINE BESCHREIBUNG EINIGER BEISPIELHAFTER AUSFÜHRUNGSFORMEN DER ERFINDUNG

Eine der Aufgaben der Erfindung besteht darin, eine Vorrichtung, ein System und ein Verfahren bereitzustellen, mit denen die oben genannten Nachteile vermieden werden können.

Die Aufgabe wird gelöst durch eine Vorrichtung gemäß Anspruch 1, ein System gemäß Anspruch 9 und ein Verfahren gemäß Anspruch 10. Weitere Ausführungsformen sind den abhängigen Ansprüchen zu entnehmen.

Ein Ausführungsbeispiel einer erfindungsgemäßen Vorrichtung umfasst eine erste integrierte Netzwerkkarte, eine zweite integrierte Netzwerkkarte, einen Speicher, die einen Treiber für die zweite Netzwerkkarte und ein Einrichtungsprogramm speichert, und einen intern mit der zweiten integrierten Netzwerkkarte und mit dem Speicher verbundenen USB- (Universal Serial Bus) Anschluss. Das Einrichtungsprogramm ist dazu eingerichtet, bei Ausführung durch einen Prozessor einer mit der Vorrichtung über den USB-Anschluss verbundenen, externen Vorrichtung die externe Vorrichtung zu veranlassen, den Treiber für die zweite Netzwerkkarte in der externen Vorrichtung zu installieren.

Ein Ausführungsbeispiel eines erfindungsgemäßen Systems umfasst eine solche Vorrichtung und die externe Vorrichtung.

Ein Ausführungsbeispiel eines erfindungsgemäßen Verfahrens umfasst in einem System, das eine erste Vorrichtung und eine zur ersten Vorrichtung externe zweite Vorrichtung aufweist, wobei die erste Vorrichtung eine erste integrierte Netzwerkkarte, eine zweite integrierte Netzwerkkarte, einen einen Treiber und ein Einrichtungsprogramm speichernden Speicher und einen intern mit der zweiten integrierten Netzwerkkarte und mit dem Speicher verbundenen USB-Anschluss umfasst:
- ein automatisches Erkennen des Speichers durch die zweite Vorrichtung, wenn die zweite Vorrichtung über den USB-Anschluss mit der ersten Vorrichtung verbunden wird; und
- ein Installieren des Treibers für die zweite Netzwerkkarte in der zweiten Vorrichtung, veranlasst durch das Einrichtungsprogramm, wenn das Einrichtungsprogramm durch einen Prozessor der zweiten Vorrichtung ausgeführt wird.

Die Erfindung basiert auf der Überlegung, dass Peripheriegeräte oder ein Internetanschluss gemeinsam von mehreren Vorrichtungen genutzt werden könnten, wenn die Vorrichtungen mittels eines lokalen Netzwerks miteinander verbunden wären. Eine konventionelle Verbindung von Vorrichtungen mittels eines lokalen Netzwerks ist jedoch, zumindest bei Verzicht auf eine Benutzerschnittstelle für eine der Vorrichtungen, nur mit erheblichem Aufwand oder gar nicht zu realisieren, wenn beide Vorrichtungen von verschiedenen IT-Betreibern bereitgestellt werden.

Die Erfindung sieht daher für bestimmte beispielhafte Ausführungsformen vor, dass eine erste Vorrichtung mit Netzwerkkarte über einen USB-Anschluss eine weitere Netzwerkkarte für eine zweite Vorrichtung bereitstellt. Der Treiber für diese Netzwerkkarte kann dabei in einem Speicher der ersten Vorrichtung bereitgestellt werden, auf den die zweite Vorrichtung über den USB-Anschluss für eine lokale Installation mittels eines ebenfalls bereitgestellten Einrichtungsprogramms zugreifen kann.

Dies kann den Effekt haben, dass Funktionen einer ersten Vorrichtung auf einfache Weise mittels eines lokalen Netzwerks über eine externe Vorrichtung genutzt werden können. Die externe Vorrichtung benötigt für ein solches lokales Netzwerk keine eigene Netzwerkkarte. Vielmehr ist die erforderliche Netzwerkkarte in die erste Vorrichtung integriert. Es ist auch keine separate Vorbereitung der externen Vorrichtung durch den Nutzer, wie ein Installieren eines Treibers von CD, erforderlich. Ein Vorteil kann sich hieraus insbesondere für Umgebungen ergeben, die von mindestens zwei unterschiedlichen IT-Betreibern betreut werden.

Der USB-Anschluss der Vorrichtung kann auf verschiedene Weisen ausgebildet sein. Er kann zum Beispiel eine USB-Buchse umfassen, die eine Verbindung mit einer USB-Buchse der externen Vorrichtung mittels eines USB-Kabels ermöglicht. Alternativ kann der USB-Anschluss zum Beispiel ein fest verbundenes USB-Kabel umfassen, das eine Verbindung mit einer USB-Buchse der externen Vorrichtung ermöglicht. Innerhalb der Vorrichtung kann die Verbindung zu der zweiten integrierten Netzwerkkarte und dem Speicher beispielsweise über einen USB-Hub oder eine USB-Hub ähnliche Schaltung erfolgen.

Der Speicher der Vorrichtung kann ein beliebiger nicht-flüchtiger Speicher sein, dessen gespeicherter Inhalt von einem Prozessor ausgelesen werden kann, beispielsweise aber nicht ausschließlich eine Festplatte, ein Flash-Speicher oder ein Solid-State-Drive (SSD). Der Speicher kann einen Schreib-und-Lesezugriff oder einen Nur-Lese-Zugriff erlauben.

Der Treiber kann in das Einrichtungsprogramm integriert oder separat gespeichert sein.

In einer beispielhaften Ausführungsform speichert der Speicher ferner Konfigurationsdaten. Das Einrichtungsprogramm könnte dann ferner dazu eingerichtet sein, bei Aufruf durch den Prozessor der externen Vorrichtung die externe Vorrichtung zu veranlassen, ein lokales Netzwerk zwischen der Vorrichtung und der externen Vorrichtung unter Verwendung der Konfigurationsdaten derart einzurichten, dass die erste Netzwerkkarte als Netzwerkkarte für die Vorrichtung und die zweite Netzwerkkarte als Netzwerkkarte für die externe Vorrichtung fungiert. Dies kann beispielsweise die Zuweisung einer Internet Protokoll (IP) Adresse an die zweite Netzwerkkarte beinhalten. Eine solche Ausführungsform kann den Effekt haben, dass die Einrichtung des Netzwerks - bis auf eventuelle Bestätigungsabfragen - vollkommen automatisch und daher ohne Vorkenntnisse des Nutzers erfolgen kann. Da beide Netzwerkkarten von einer Hand, nämlich als Bestandteile einer einzigen Vorrichtung, bereitgestellt werden, können alle erforderlichen Daten vorab vorgegeben werden.

Zusätzlich oder alternativ könnte das Einrichtungsprogramm ferner dazu eingerichtet sein, bei Aufruf durch den Prozessor der externen Vorrichtung die externe Vorrichtung zu veranlassen, basierend auf den Konfigurationsdaten Vorgaben für eine erneute Verbindung und/oder für einen Neustart der externen Vorrichtung in der externen Vorrichtung zu speichern. Dies kann den Effekt haben, dass Treiber und Konfigurationsdaten nur einmalig installiert bzw. gespeichert werden und/oder dass bestimmte Programme bei einer nachfolgenden Verbindung oder bei einem Neustart automatisch aufgerufen werden.

In einer beispielhaften Ausführungsform ist der Speicher derart konfiguriert, dass er nur teilweise freigegeben ist für einen direkten Zugriff durch eine externe Vorrichtung über den USB-Anschluss. Alternativ oder zusätzlich könnte die Vorrichtung einen zweiten Speicher umfassen, der nicht unmittelbar über den USB-Anschluss zugänglich ist. Beide Varianten können den Effekt haben, dass auf bestimmte gespeicherte Daten erst nach Herstellung einer bestimmten, gegebenenfalls gesicherten Verbindung zugegriffen werden kann.

In einer beispielhaften Ausführungsform speichert der Speicher ferner ein Startprogramm. Das Startprogramm kann dazu eingerichtet sein, bei Aufruf des Startprogramms durch den Prozessor der externen Vorrichtung die externe Vorrichtung zu veranlassen, einen Fernzugriff auf die Vorrichtung einzurichten. Ein solcher Fernzugriff wird auch Terminaldienst genannt und kann beispielsweise ein Terminalservice oder Remote Desktop Service von Microsoft Windows sein. Es versteht sich, dass das Startprogramm ein separates Programm sein kann, aber beispielsweise auch ein Teil des Einrichtungsprogramms. Es versteht sich ferner, dass vorgesehen sein kann, dass das Startprogramm automatisch aufgrund der Vorgaben des Einrichtungsprogramms ausgeführt wird oder dass es von einem Nutzer separat aufgerufen werden muss.

Der Fernzugang kann beispielsweise eine Nutzung mindestens eines von der Vorrichtung auszuführenden Anwendungsprogramms ermöglichen, das in dem Speicher oder in einem weiteren Speicher der Vorrichtung gespeichert ist. Das kann den Effekt haben, dass ein Anwendungsprogramm unmittelbar auf der bereitgestellten Vorrichtung genutzt werden kann, ohne dass es erst in einer anderen Vorrichtung installiert werden müsste.

Alternativ oder zusätzlich kann der Fernzugang eine Nutzung von mit der externen Vorrichtung verbundenen Peripheriegeräten durch Funktionen mindestens eines Anwendungsprogramms, das in dem Speicher oder in einem weiteren Speicher der Vorrichtung gespeichert ist, ermöglichen. Solche Peripheriegeräte können eine Tastatur, eine Maus, einen Bildschirm, einen Drucker sowie diverse andere Geräte umfassen. Das kann den Effekt haben, dass die Vorrichtung keine eigenen Peripheriegeräte benötigt, sondern auf die Peripheriegeräte der externen Vorrichtung zurückgreifen kann.

In beispielhaften Ausführungsformen besteht die Möglichkeit, teilweise Peripheriegeräte der externen Vorrichtung und teilweise eigene Peripheriegeräte der Vorrichtung zu nutzen. So könnten Tastatur, Bildschirm, Bon-Drucker und Scanner der externen Vorrichtung genutzt werden, und Sparbuchdrucker und PIN-Pads direkt an die Vorrichtung anschließbar sein.

Alternativ oder zusätzlich kann der Fernzugang das Einrichten und Nutzen eines Virtual Private Network (VPN) Tunnels zwischen der Vorrichtung und einem Server über die externe Vorrichtung unter Verwendung eines in dem Speicher oder einem weiteren Speicher der Vorrichtung gespeicherten VPN-Programm ermöglichen. Dies kann den Effekt haben, dass eine sichere Verbindung zwischen der Vorrichtung und dem Server hergestellt werden kann. Der Aufbau des VPN-Tunnels kann automatisch oder auf Anforderung eines Nutzers hin erfolgen. Der Aufbau des VPN-Tunnels könnte beispielsweise automatisch in regelmäßigen Abständen erfolgen, um das Anwendungsprogramm oder von dem Anwendungsprogramm genutzte Daten zu aktualisieren.

In einer beispielhaften Ausführungsform ist die Vorrichtung dazu eingerichtet, für das Starten des Fernzugriffs eine Authentifizierung eines Nutzers der externen Vorrichtung durchzuführen. Dies kann den Effekt haben, dass ein unbefugter Zugriff auf Daten der Vorrichtung verhindert werden kann.

In einer beispielhaften Ausführungsform ist der USB-Anschluss, neben einem optionalen Anschluss zur Stromversorgung der Vorrichtung, der einzige externe Anschluss der Vorrichtung. Dies kann den Effekt haben, dass die Vorrichtung sehr einfach und klein ausgebildet werden kann. Wie oben erwähnt, können an der Vorrichtung jedoch auch zusätzliche Anschlüsse für besondere Peripheriegeräte oder andere Anschlüsse vorgesehen werden.

In einer beispielhaften Ausführungsform sind die Netzwerkkarten Ethernet-Karten. Das kann den Effekt haben, dass ein einfacher Zugriff auf das Internet über die externe Vorrichtung ermöglicht wird. In einer beispielhaften Ausführungsform ist der Speicher ein SSD. Das kann den Effekt haben, dass die Vorrichtung wenig störanfällig und robust ist. In einer beispielhaften Ausführungsform umfasst die Vorrichtung ein Betriebssystem.

In einer beispielhaften Ausführungsform ist die Vorrichtung ein beliebiger Computer, wie beispielsweise ein Personal Computer (PC), ein Mini-PC oder ein Small Form Factor (SFF) Computer. Dies kann den Effekt haben, dass eine vorhandene Vorrichtung mit wenig Aufwand angepasst werden kann. Dies kann ferner den Effekt haben, dass auch die Funktionalitäten eines Computers zur Verfügung stehen.

Jedes erwähnte Programm enthält computerlesbare Programmanweisungen, die von einem Prozessor ausgeführt werden können. Es versteht sich, dass jedes erwähnte Programm nicht nur ein Einzelprogramm sondern auch eine mehrere Einzelprogramme umfassende Software sein kann.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### KURZE BESCHREIBUNG DER ZEICHNUNGEN

In den Figuren zeigt:
- Fig. 1: ein Blockdiagramm einer beispielhaften Ausführungsform eines erfindungsgemäßen Systems; und
- Fig. 2: ein Ablaufdiagramm mit Verfahrensschritten einer beispielhaften Ausführungsform des erfindungsgemäßen Verfahrens.

### DETAILLIERTE BESCHREIBUNG EINIGER BEISPIELHAFTER AUSFÜHRUNGSFORMEN DER ERFINDUNG

Die vorliegende Erfindung wird im Folgenden anhand von beispielhaften Ausführungsformen beschrieben, die das Einrichten eines lokalen Netzwerks unterstützen und die Nutzung von Peripheriegeräten eines PCs für einen anderen PC über das lokale Netz ermöglichen.

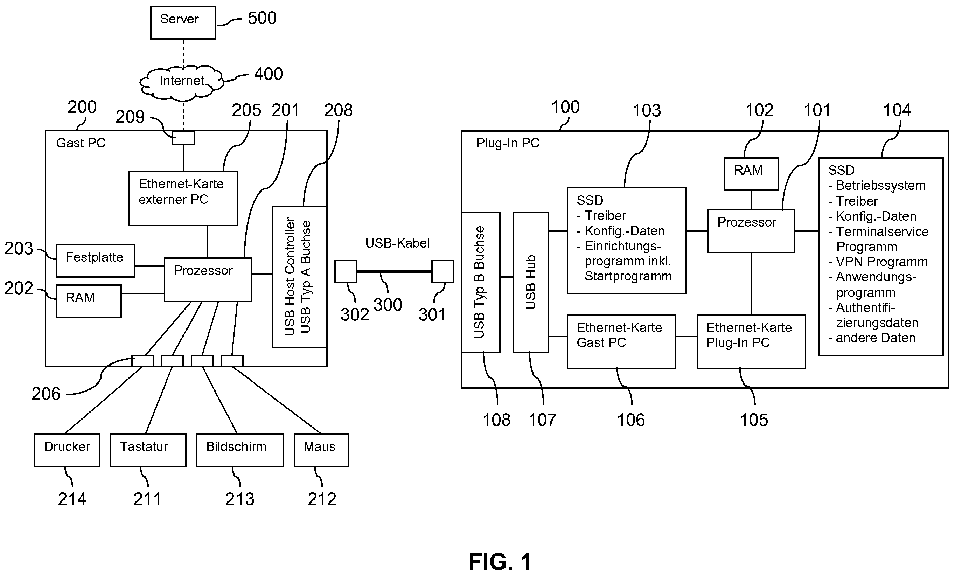

Figur 1 ist eine schematische Darstellung einer beispielhaften Ausführungsform eines erfindungsgemäßen Systems.

Das System ist beispielhaft für eine Postagentur vorgesehen, die in einem Laden für Bürobedarf, einer Buchhandlung, einem Kiosk oder einer anderen Einzelhandelsniederlassung für ein bestimmtes Postunternehmen betrieben wird.

Das System umfasst einen Plug-In PC 100, einen Gast PC 200 mit verschiedenen Peripheriegeräten 211-214, ein USB-Kabel 300 und einen Server 500. Der Plug-In PC 100, das USB-Kabel 300 und der Server 500 werden beispielsweise von dem Postunternehmen bereitgestellt. Der Gast PC 200 und die Peripheriegeräte 211-214 gehören beispielsweise dem Betreiber der Einzelhandelsniederlassung und werden für den Betrieb der Niederlassung genutzt.

Der Plug-In PC 100 ist eine beispielhafte Ausführungsform einer erfindungsgemäßen Vorrichtung. Der Plug-In PC 100 basiert beispielsweise auf einem konventionellen PC oder einem konventionellen Mini-PC. Er umfasst mindestens einen Prozessor 101 und, verbunden mit dem Prozessor 101, einen Arbeitsspeicher (Random Access Memory RAM) 102, einen ersten nichtflüchtigen Speicher 103, einen zweiten nichtflüchtigen Speicher 104 und eine Netzwerkkarte 105. Der Plug-In PC 100 umfasst ferner eine zweite Netzwerkkarte 106, und eine Schaltung mit einem USB-Hub 107 oder einer USB-Hub ähnlichen Schaltung und einer von außen zugänglichen USB Buchse vom Typ B 108.

Der Prozessor 101 ist dazu ausgebildet, Computerprogramme auszuführen und damit den Plug-In PC 100 zu veranlassen, gewünschte Aktionen auszuführen. Der Prozessor 101 kann beispielsweise ein Mikroprozessor sein. Der Prozessor 101 kann ferner beispielsweise ein Hauptprozessor (Central Processing Unit CPU) sein.

Die Speicher 103, 104 können SSDs sein, aber auch beliebige andere Speicher, wie Festplatten.

Der Speicher 103 speichert einen Treiber für die Netzwerkkarte 106, Konfigurationsdaten und ein Einrichtungsprogramm. Der Speicher 103 könnte noch weitere Programme und Daten speichern.

Der Speicher 104 speichert ein Betriebssystem für die Vorrichtung 100, einen Treiber für die Netzwerkkarte 105, Konfigurationsdaten, ein Fernzugriffs-Programm, ein VPN-Programm, ein Anwendungsprogramm, Authentifizierungsdaten und andere Daten, wie beispielsweise von dem Anwendungsprogramm zu verwendende Daten. Das Betriebssystem kann beispielsweise ein Windows-Betriebssystem sein und das Fernzugriffs-Programm kann beispielsweise eine von dem Betriebssystem bereitgestellte Terminalservice Software sein. Im vorliegenden Beispiel kann das Anwendungsprogramm eine Postapplikation sein, die etwa eine Kassenanwendung für den Verkauf von Postartikeln umfassen kann. Der Speicher 104 könnte noch weitere Programme und Daten speichern.

Die Speicher 103, 104 und die darin gespeicherten Programme sind eingerichtet, um, mit einem Prozessor, eine Vorrichtung zu veranlassen, gewünschte Aktionen auszuführen, wenn ein jeweiliges Programm von einem jeweiligen Prozessor ausgelesen und ausgeführt wird.

Die Netzwerkkarten 105, 106 können beispielsweise Ethernet-Netzwerkkarten sein. Die Netzwerkkarten 105, 106 sind miteinander verbunden. Hierzu kann beispielsweise ein Netzwerkkabel verwendet werden. Aus Platzgründen kann die Verbindung aber beispielsweise auch direkt auf einem Chip erfolgen, auf dem beide Netzwerkkarten 105, 106 integriert sind.

Die USB-Buchse vom Typ B 108 könnte alternativ auch in einen USB-Hub 107 integriert sein. Anstelle der USB Buchse 108 könnte der Plug-In PC 100 auch ein fest angeschlossenes USB-Kabel aufweisen, das an seinem Ende einen USB-Stecker vom Typ A umfasst.

Es versteht sich, dass der Plug-In PC 100 verschiedene weitere, nicht dargestellte Komponenten umfassen kann, wie zum Beispiel einen Anschluss für eine Stromversorgung oder einen Anschluss für bestimmte Peripheriegeräte.

In beispielhaften Ausführungsformen umfasst der Plug-In PC 100 neben der USB-Buchse 108 als externen Anschluss ausschließlich einen Anschluss für eine Stromversorgung. In einigen Ausführungsformen könnte auch die Stromversorgung über eine USB-Verbindung erfolgen, so dass der USB-Anschluss die einzige externe Verbindung sein könnte. Mit beiden Ausführungsformen können Abmessungen von weniger als 10 cm x 10 cm x 5 cm für den Plug-In PC 100 erreicht werden.

Der Gast PC 200 ist eine beispielhafte externe Vorrichtung. Der Gast PC 200 kann beispielsweise ein in der Einzelhandelsniederlassung verwendeter, konventioneller PC sein. Der Gast PC 200 umfasst mindestens einen Prozessor 201 und, mit Prozessor 201 verbunden, einen Arbeitsspeicher (RAM) 202, eine Festplatte 203, eine Ethernet-Netzwerkkarte 205, Anschlüsse 206 für verschiedene Peripheriegeräte sowie eine Schaltung 208 mit einem USB Host-Controller und einer von außen zugänglichen USB Buchse vom Typ A. Gast PC 200 weist ferner einen Ethernetanschluss 209 auf, der mit der Netzwerkkarte 205 verbunden ist.

Prozessor 201 ist dazu ausgebildet, Computerprogramme auszuführen und damit den Gast PC 200 zu veranlassen, gewünschte Aktionen auszuführen. Prozessor 201 kann beispielsweise ein als Mikroprozessor ausgebildeter Hauptprozessor sein.

Die Festplatte 203 speichert das Betriebssystem für den Gast PC 200 und andere Programme und Daten. Das Betriebssystem kann beispielsweise wiederum ein Windows-Betriebssystem, das ein Terminalservice-Programm umfasst, sein. Anstelle der Festplatte 203 könnte auch ein anderer Datenspeicher vorgesehen werden.

Die Ethernet-Netzwerkkarte 205 ermöglicht über den Ethernetanschluss 209 eine Verbindung zum Internet 400. Anstelle der Ethernet-Netzwerkkarte 205 könnte auch eine andere Netzwerkkarte vorgesehen sein.

Die Peripheriegeräte können beispielsweise eine Tastatur 211, eine Maus 212, einen Bildschirm 213 und einen Drucker 214 umfassen. Es versteht sich, dass eine Vielzahl anderer Peripheriegeräte, wie ein PIN Pad zur Eingabe einer Geheimzahl oder ein Scanner, ebenso möglich sind.

Das USB-Kabel 300 umfasst an einem Ende einen USB-Stecker vom Typ B 301 und an dem anderen Ende einen USB-Stecker vom Typ A 302. Somit kann das Kabel 300 über den USB-Stecker 301 mit der USB-Buchse 108 und über den USB-Stecker 302 mit der USB-Buchse der Schaltung 208 verbunden werden, so dass der Gast PC 200 mit dem Plug-In PC 100 verbunden ist.

Es versteht sich, dass für die USB-Verbindungen auch andere Anschlüsse vorgesehen werden können, wie Mini- oder MicroUSB-Anschlüsse.

Im Server 500 können beispielsweise Updates für das im Plug-In PC 100 gespeicherte Anwendungsprogramm und aktualisierte Daten für das Anwendungsprogramm bereitgestellt werden. Auf den Server 500 kann über das Internet 400 zugegriffen werden.

Das System aus Figur 1 kann in vielfältiger Weise abgewandelt werden, sowohl durch das Weglassen von Komponenten wie auch durch das Hinzufügen von Komponenten. Hierdurch können sich weitere oder alternative Vorteile ergeben.

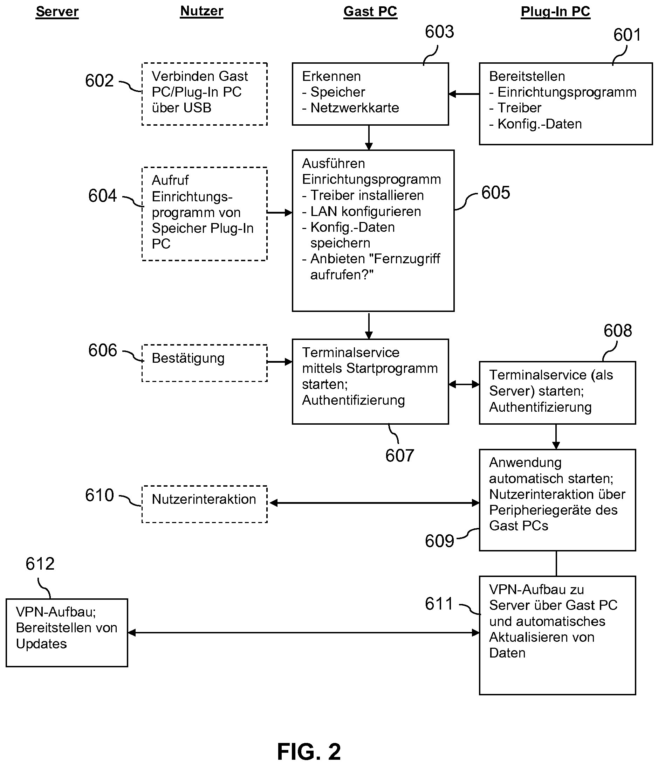

Figur 2 ist ein Ablaufdiagramm, das eine Operation in dem System aus Figur 1 gemäß einem beispielhaften Ausführungsbeispiel eines erfindungsgemäßen Verfahrens illustriert. Die Figur zeigt, von links nach rechts, Operationen am Server 500, Nutzeraktionen, Operationen am Gast PC 200, und Operationen am Plug-In PC 100.

Der Gast PC 200 ist dabei so konfiguriert, dass er das "Recht" hat, angeschlossene USB Geräte zu erkennen. Der Gast PC 200 ist ferner so konfiguriert, dass er Internetverbindungen herstellen darf.

Wie oben erwähnt stellt der Plug-In PC 100 in Speicher 103 ein Einrichtungsprogramm, einen Treiber und Konfigurationsdaten bereit. (Aktion 601)

Wenn ein Nutzer den Gast PC 200 über das USB-Kabel 300 mit dem Plug-In PC 100 verbindet (Aktion 602), so erkennt der Gast PC 200 über die USB-Verbindung automatisch den Speicher 103 und die Netzwerkkarte 106 (Aktion 603).

Für den Nutzer ist daraufhin der Inhalt des Speichers 103, zumindest aber das Einrichtungsprogramm, auf dem Bildschirm 213 sichtbar. Wenn der Nutzer mittels der Tastatur 211 und/oder der Maus 212 das Einrichtungsprogramm aufruft (Aktion 604), so wird das Einrichtungsprogramm im Gast-PC 200 von Prozessor 201 ausgeführt (Aktion 605).

Durch das Ausführen des Einrichtungsprogramms wird der Treiber vom Speicher 103 auf den Gast PC 200 heruntergeladen und im Gast PC 200 installiert. Die erforderlichen Programme und Daten werden auf der Festplatte 203 gespeichert. Des Weiteren wird zwischen dem Gast PC 200 und dem Plug-In PC 100 unter Verwendung von Konfigurationsdaten ein lokales Netzwerk derart eingerichtet, dass die Netzwerkkarte 105 als Netzwerkkarte für den Plug-In PC 100 fungiert und die Netzkarte 106 als Netzkarte für den Gast PC 200. Die Konfigurationsdaten werden vom Prozessor 201 aus dem Speicher 103 abgerufen und soweit erforderlich auf der Festplatte 203 gespeichert. Die für die Einrichtung des lokalen Netzwerks bereitgestellten Konfigurationsdaten können beispielsweise die IP-Adresse und die Subnetz-Maske für die Netzwerkkarte 106 umfassen. Weitere Konfigurationsdaten können ebenfalls vom Prozessor 201 aus dem Speicher 103 abgerufen und soweit erforderlich auf der Festplatte 203 gespeichert werden. Solche weiteren Konfigurationsdaten können beispielsweise vorgeben, wie bei einer späteren erneuten Verbindung des Gast PCs 200 mit dem Plug-In PC 100 bzw. bei einem Neustart des Gast PCs 200 bei weiterhin bestehender Verbindung verfahren werden soll. Beispielsweise kann so sichergestellt werden, dass der Treiber nicht jedes Mal neu geladen wird und dass bestimmte Programme automatisch aufgerufen werden, etc. Des Weiteren wird der Nutzer über den Bildschirm 211 über eine Abfrage "Fernzugriff starten?" gefragt, ob ein Fernzugriff gestartet werden soll.

Wenn der Nutzer die Abfrage mittels der Tastatur 212 und/oder der Maus 213 positiv bestätigt (Aktion 606), so ruft der Prozessor 201 ein Startprogramm auf. In der vorliegenden beispielhaften Ausführungsform ist das Startprogramm ein Teil des Einrichtungsprogramms. Es versteht sich jedoch, dass das Startprogramm auch als separates Programm gespeichert sein könnte, und dass das Einrichtungsprogramm den Prozessor 201 auf die Nutzerbestätigung hin lediglich veranlasst, das Startprogramm vom Speicher 103 abzurufen und auszuführen. Mit der Ausführung des Startprogramms durch den Prozessor 201 wird der Prozessor 101 über das eingerichtete lokale Netz veranlasst, den Terminalservice zu starten (Aktion 607, 608). Das Startprogramm kann hierzu beispielsweise die vom Windows Betriebssystem des Plugin PC PCs 100 ohnehin bereitgestellte Terminalservice-Software nutzen. Die für die Einrichtung benötigten Parameter werden von dem Startprogramm bereitgestellt oder, veranlasst durch das Startprogramm, von Prozessor 201 als weitere Konfigurationsparameter aus dem Speicher 103 ausgelesen. Die Konfigurationsparameter können beispielsweise vorgeben, dass der Drucker 214 für eine Nutzung durch den Plug-In PC 100 freigegeben sein soll, dass ein Kopieren von Daten von dem Gast PC 200 auf den Plug-In PC 100 nicht erlaubt ist, usw. Nach Einrichten des Terminalservices fungiert der Plug-In PC 100 dann als Server und der Gast PC 200 als Client für den Fernzugriff.

Alternativ könnte der Fernzugriff durch den Prozessor 201, veranlasst von dem Einrichtungsprogramm, automatisch ohne Nutzerabfrage gestartet werden, um den Nutzeraufwand zu minimieren.

Im Rahmen des Einrichtens des Fernzugriffs kann in einigen beispielhaften Ausführungsformen eine Authentifizierung des Nutzers erfolgen. Die hierzu erforderlichen Authentifizierungsdaten können beispielsweise im Speicher 104 gespeichert sein. Die Authentifizierung kann dabei auf beliebige Weise erfolgen. Beispielsweise könnte der Nutzer aufgefordert werden, ein Passwort einzugeben, das ihm vorher von dem Postunternehmen zusammen mit dem Plug-In PC 100 zur Verfügung gestellt wurde.

Ist der Fernzugriff eingerichtet, so kann der Nutzer über die Peripheriegeräte 211-213 des Gast PCs 200 eine vorgesehene Anwendung des Plug-In PCs 100 nutzen (Aktionen 609, 610). Die Funktionen der Anwendung können auch weitere Peripheriegeräte des Gast PCs 200 wie den Drucker 214 nutzen. Die Anwendung kann automatisch gestartet werden, oder mittels eines Aufrufs durch den Nutzer. Die Anwendung läuft in dem Plug-In PC 100 selber, das heißt, ein entsprechendes, in Speicher 104 gespeichertes Anwendungsprogramm wird von Prozessor 101 ausgeführt.

Neben dem Anwendungsprogramm speichert der Speicher 104 in beispielhaften Ausführungsformen zumindest noch ein VPN Programm. Dieses VPN Programm kann, nach Einrichtung des Fernzugriffs, ebenso von einem Nutzer zur Ausführung durch den Prozessor 101 aufgerufen werden, oder es kann automatisch aufgerufen werden.

Wird das VPN Programm aufgerufen und von dem Prozessor 101 ausgeführt, so wird ein VPN-Tunnel aufgebaut. Der erste Endpunkt des VPN-Tunnels ist der Plug-In PC 100 und der zweite Endpunkt des VPN-Tunnels ist der Server 500. Der Tunnel verläuft vom Prozessor 101 über die Netzwerkkarte 105, die Netzwerkkarte 106, die USB-Verbindung 107, 108, 301, 300, 302, 208, den Prozessor 201, die Netzwerkkarte 205, den Anschluss 209 und das Internet 400 zum Server 500. (Aktion 611, 612) Der VPN Client des Plug-In-PCs 100 ist so eingerichtet, dass er als Standardgateway die IP-Adresse der Netzwerkkarte 106 verwendet.

Ist der VPN-Tunnel aufgebaut, so kann beispielsweise ein Update des Plug-In PCs 100 erfolgen. Zum Beispiel könnten einmal täglich die für die Anwendung erforderlichen Daten vom Server 500 auf den Plug-In PC 100 heruntergeladen werden, und einmal wöchentlich könnte überprüft werden, ob es eine Aktualisierung für das Anwendungsprogramm gibt, usw.

Es versteht sich, dass das beschriebene Verfahren in vielerlei Hinsicht abgewandelt werden kann.

In einigen Ausführungsbeispielen ist die erfindungsgemäße Vorrichtung also ein PC, der an den USB-Port eines Gast PCs angeschlossen werden kann. Der Plug-In PC kann die Ressourcen des Gast PCs, wie beispielsweise einen Netzanschluss und Peripheriegeräte, mitnutzen. Er kann dabei mittels eines Fernzugriffs eine sichere Umgebung für Anwendungen zur Verfügung stellen und mittels eines VPNs einen sicheren Datenaustausch mit einem Server ermöglichen. Eigene Peripheriegeräte für den Plug-In PC sind nicht erforderlich, so dass Kosten gespart werden können.

Die dargestellten oder beschriebenen Verbindungen zwischen Komponenten sind als funktionale Verbindungen zu verstehen. Sie können direkt oder indirekt über mehrere andere Komponenten realisiert werden. Jeder der Prozessoren kann eine oder mehrere Kontrolleinheiten umfassen, und jeder der Speicher kann eine oder mehrere Speichereinheiten umfassen. Die Abfolge der geschilderten Aktionen in dem Ablaufdiagramm ist nicht zwingend; alternative Abfolgen der Verfahrensschritte sind denkbar. Die Aktionen können auf verschiedene Art und Weise implementiert werden.

Es versteht sich, dass die beschriebenen Ausführungsformen lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Vorrichtung (100) umfassend:
- eine erste integrierte Netzwerkkarte (105),
- eine zweite integrierte Netzwerkkarte (106),
- einen Speicher (103), der einen Treiber für die zweite Netzwerkkarte (106) und ein Einrichtungsprogramm speichert, und
- einen intern mit der zweiten integrierten Netzwerkkarte (106) und mit dem Speicher (103) verbundenen USB-Anschluss (107, 108), wobei das Einrichtungsprogramm dazu eingerichtet ist, bei Ausführung durch einen Prozessor (201) einer mit der Vorrichtung (100) über den USB-Anschluss (107, 108) verbundenen, externen Vorrichtung (200), die externe Vorrichtung (200) zu veranlassen, den Treiber für die zweite Netzwerkkarte (106) in der externen Vorrichtung (200) zu installieren.

2. Vorrichtung (100) gemäß Anspruch 1, wobei der Speicher (103) ferner Konfigurationsdaten speichert, und wobei das Einrichtungsprogramm ferner dazu eingerichtet ist, bei Aufruf durch den Prozessor (201) der externen Vorrichtung (200), die externe Vorrichtung (200) zu veranlassen
- ein lokales Netzwerk zwischen der Vorrichtung (100) und der externen Vorrichtung (200) unter Verwendung der Konfigurationsdaten derart einzurichten, dass die erste Netzwerkkarte (105) als Netzwerkkarte für die Vorrichtung (100) und die zweite Netzwerkkarte (106) als Netzwerkkarte für die externe Vorrichtung (200) fungiert; und/oder
- basierend auf den Konfigurationsdaten Vorgaben für eine erneute Verbindung und/oder für einen Neustart der externen Vorrichtung (200) in der externen Vorrichtung (200) zu speichern.

3. Vorrichtung (100) gemäß Anspruch 1 oder 2, wobei
- der Speicher (103) derart konfiguriert ist, dass er nur teilweise freigegeben ist für einen direkten Zugriff durch eine externe Vorrichtung (200) über den USB-Anschluss (107, 108); und/oder
- die Vorrichtung (100) einen zweiten Speicher (104) umfasst.

4. Vorrichtung (100) gemäß einem der vorangehenden Ansprüche,
- wobei der Speicher (103) ferner ein Startprogramm speichert und
- wobei das Startprogramm dazu eingerichtet ist, bei Aufruf des Startprogramms durch den Prozessor (201) der externen Vorrichtung (200) die externe Vorrichtung (200) zu veranlassen einen Fernzugriff auf die Vorrichtung (100) einzurichten, der
- eine Nutzung eines von der Vorrichtung (100) auszuführenden Anwendungsprogramms ermöglicht, das in dem Speicher (103) oder in einem weiteren Speicher (104) der Vorrichtung (100) gespeichert ist, und/oder
- eine Nutzung von mit der externen Vorrichtung (200) verbundenen Peripheriegeräten (211-214) durch Funktionen eines Anwendungsprogramms ermöglicht, das in dem Speicher (103) oder in einem weiteren Speicher (104) der Vorrichtung (100) gespeichert ist.

5. Vorrichtung (100) gemäß einem der vorangehenden Ansprüche,
- wobei der Speicher (103) ferner ein Startprogramm speichert und
- wobei das Startprogramm dazu eingerichtet ist, bei Aufruf des Startprogramms durch den Prozessor (201) der externen Vorrichtung (200) die externe Vorrichtung (200) zu veranlassen einen Fernzugriff auf die Vorrichtung (100) einzurichten, der ein Einrichten und Nutzen eines VPN-Tunnels zwischen der Vorrichtung (100) und einem Server (500) über die erste Netzwerkkarte (105), die zweite Netzwerkkarte (106) und die externe Vorrichtung (200) unter Verwendung eines in dem Speicher (103) oder einem weiteren Speicher (104) der Vorrichtung (100) gespeicherten VPN-Programms ermöglicht, wobei die erste Netzwerkkarte (105) als Netzwerkkarte für die Vorrichtung (100) und die zweite Netzwerkkarte (106) als Netzwerkkarte für die externe Vorrichtung (200) fungiert.

6. Vorrichtung (100) gemäß Anspruch 4 oder 5, wobei die Vorrichtung (100) dazu eingerichtet ist, für das Einrichten des Fernzugriffs eine Authentifizierung eines Nutzers der externen Vorrichtung (200) durchzuführen.

7. Vorrichtung (100) gemäß einem der vorangehenden Ansprüche, wobei der USB-Anschluss (107, 108), neben einem optionalen Anschluss zur Stromversorgung der Vorrichtung (100), der einzige externe Anschluss der Vorrichtung (100) ist.

8. Vorrichtung (100) gemäß einem der vorangehenden Ansprüche, wobei
- die Netzwerkkarten (105, 106) Ethernet-Karten sind und/oder
- der Speicher (103) ein Solid State Drive (SSD) ist und/oder
- die Vorrichtung (100) ein Betriebssystem umfasst.

9. Vorrichtung (100) gemäß einem der vorangehenden Ansprüche, wobei die Vorrichtung (100)
- ein Computer,
- ein Personal Computer (PC),
- ein Mini-PC oder
- ein Small Form Factor (SFF) Computer ist.

10. System umfassend eine Vorrichtung (100) gemäß einem der Ansprüche 1-9 und eine externe Vorrichtung (200).

11. Verfahren in einem System, das eine erste Vorrichtung (100) und eine zur ersten Vorrichtung (100) externe zweite Vorrichtung (200) aufweist, wobei die erste Vorrichtung (100) eine erste integrierte Netzwerkkarte (105), eine zweite integrierte Netzwerkkarte (106), einen einen Treiber und ein Einrichtungsprogramm speichernden Speicher (103) und einen intern mit der zweiten integrierten Netzwerkkarte (106) und mit dem Speicher (103) verbundenen USB-Anschluss (107, 108) umfasst, das Verfahren umfassend:
- ein automatisches Erkennen des Speichers (103) durch die zweite Vorrichtung (200), wenn die zweite Vorrichtung (200) über den USB-Anschluss (107, 108) mit der ersten Vorrichtung (100) verbunden wird; und
- ein Installieren des Treibers für die zweite Netzwerkkarte (106) in der zweiten Vorrichtung (200) veranlasst durch das Einrichtungsprogramm, wenn das Einrichtungsprogramm durch einen Prozessor (201) der zweiten Vorrichtung (200) ausgeführt wird.

## Claims

1. Device (100) comprising:
- a first integrated network card (105),
- a second integrated network card (106),
- a memory (103), which stores a driver for the second network card (106) and a setup program, and
- a USB connection (107, 108) internally connected to the second integrated network card (106) and to the memory (103), wherein the setup program, when executed by a processor (201) of an external device (200) connected to the device (100) via the USB connection (107, 108), is configured to cause the external device (200) to install the driver for the second network card (106) in the external device (200).

2. Device (100) according to Claim 1, wherein the memory (103) further stores configuration data, and wherein the setup program is further configured to, when invoked by the processor (201) of the external device (200), cause the external device (200) to:
- set up a local area network between the device (100) and the external device (200) using the configuration data such that the first network card (105) functions as a network card for the device (100) and the second network card (106) functions as a network card for the external device (200); and/or
- store presettings for a reconnection and/or for a restart of the external device (200) in the external device (200) based on the configuration data.

3. Device (100) according to Claim 1 or 2, wherein
- the memory (103) is configured such that it is only partly enabled for direct access by an external device (200) via the USB connection (107, 108); and/or
- the device (100) comprises a second memory (104).

4. Device (100) according to any one of the preceding claims,
- wherein the memory (103) also stores a start program, and
- wherein the start program is configured to, when it is invoked by the processor (201) of the external device (200), cause the external device (200) to set up remote access to the device (100), the remote access:
- enabling a use of an application program, which is to be executed by the device (100) and which is stored in the memory (103) or in another memory (104) of the device (100), and/or
- enabling a use of peripheral devices (211-214), which are connected to the external device (200), by functions of an application program which is stored in the memory (103) or in another memory (104) of the device (100).

5. Device (100) according to any one of the preceding claims,
- wherein the memory (103) further stores a start program, and
- wherein the start program is configured to, when invoked by the processor (201) of the second device (200), cause the external device (200) to set up remote access to the device (100), this remote access enabling the setting up and use of a VPN tunnel between the device (100) and a server (500) via the first network card (105), the second network card (106) and the external device (200) using a VPN program stored in the memory (103) or in another memory (104) of the device (100), wherein the first network card (105) functions as a network card for the device (100) and the second network card (106) functions as a network card for the external device (200).

6. Device (100) according to Claim 4 or 5, wherein the device (100) is configured to carry out an authentication of a user of the external device (200) for setting up the remote access.

7. Device (100) according to any one of the preceding claims, wherein the USB connection (107, 108), apart from an optional connection for supplying power to the device (100), is the only external connection of the device (100).

8. Device (100) according to any one of the preceding claims, wherein
- the network cards (105, 106) are Ethernet cards and/or
- the memory (103) is a solid-state drive (SSD) and/or
- the device (100) comprises an operating system.

9. Device (100) according to any one of the preceding claims, wherein the device (100) is
- a computer,
- a personal computer (PC),
- a mini PC or
- a small form factor (SFF) computer.

10. System comprising a device (100) according to any one of Claims 1 to 9 and an external device (200).

11. Method in a system which has a first device (100) and a second device (200) which is external to the first device (100), wherein the first device (100) comprises a first integrated network card (105), a second integrated network card (106), a memory (103), which stores a driver and a setup program, and a USB connection (107, 108) internally connected to the second integrated network card (106) and to the memory (103), the method comprising:
- automatic recognition of the memory (103) by the second device (200) when the second device (200) is connected to the first device (100) via the USB connection (107, 108); and
- installation of the driver for the second network card (106) in the second device (200), caused by the setup program, when the setup program is executed by a processor (201) of the second device (200).

## Revendications

1. Dispositif (100) comprenant :
- une première carte réseau intégrée (105),
- une seconde carte réseau intégrée (106),
- une mémoire (103) qui stocke un pilote pour la seconde carte réseau (106) et un programme de mise en place, et
- une connexion USB (107, 108) connectée de façon interne à la seconde carte réseau intégrée (106) et à la mémoire (103), où le programme de mise en place est installé dans le but d'amener, lors de l'exécution par un processeur (201) d'un dispositif externe (200) connecté au dispositif (100) par la connexion USB (107, 108), le dispositif externe (200) à installer le pilote prévu pour la seconde carte réseau (106) dans le dispositif externe (200) .

2. Dispositif (100) selon la revendication 1, où la mémoire (103) stocke en outre des données de configuration et où le programme de mise en place est installé en outre dans le but d'amener, au cas où il est fait appel au processeur (201) du dispositif externe (200), le dispositif externe (200)
- à mettre en place un réseau local entre le dispositif (100) et le dispositif externe (200) en utilisant les données de configuration, de manière telle que la première carte réseau (105) fonctionne comme carte réseau pour le dispositif (100) et que la seconde carte réseau (106) fonctionne comme carte réseau pour le dispositif externe (200) ; et/ou
- en se basant sur les données de configuration, à stocker en mémoire, dans le dispositif externe (200), des instructions pour une connexion renouvelée et/ou pour un nouveau démarrage du dispositif externe (200).

3. Dispositif (100) selon la revendication 1 ou 2, où
- la mémoire (103) est configurée de manière telle, qu'elle soit libérée seulement partiellement pour un accès direct par un dispositif externe (200), via la connexion USB (107, 108) ; et/ou
- le dispositif (100) comprend une seconde mémoire (104).

4. Dispositif (100) selon l'une quelconque des revendications précédentes,
- où la mémoire (103) stocke en outre un programme de démarrage et
- où le programme de démarrage est installé dans le but d'amener, au cas où il est fait appel au programme de démarrage par le processeur (201) du dispositif externe (200), le dispositif externe (200) à mettre en place un accès à distance au dispositif (100), accès à distance qui
- permet une utilisation d'un programme d'application à exécuter par le dispositif (100), lequel programme d'application est stocké dans la mémoire (103) ou dans une autre mémoire (104) du dispositif (100), et/ou
- permet une utilisation d'unités périphériques (211 à 214) connectées au dispositif externe (200), par des fonctions d'un programme d'application qui est stocké dans la mémoire (103) ou dans une autre mémoire (104) du dispositif (100).

5. Dispositif (100) selon l'une quelconque des revendications précédentes,
- où la mémoire (103) stocke en outre un programme de démarrage et
- où le programme de démarrage est installé dans le but d'amener, au cas où il est fait appel au programme de démarrage par le processeur (201) du dispositif externe (200), le dispositif externe (200) à mettre en place un accès à distance au dispositif (100), accès à distance qui permet une mise en place et une utilisation d'un tunnel VPN entre le dispositif (100) et un serveur (500), par la première carte réseau (105), par la seconde carte réseau (106) et par le dispositif externe (200), en utilisant un programme VPN stocké dans la mémoire (103) ou dans une autre mémoire (104) du dispositif (100), où la première carte réseau (105) fonctionne comme carte réseau pour le dispositif (100), la seconde carte réseau (106) fonctionnant comme carte réseau pour le dispositif externe (200) .

6. Dispositif (100) selon la revendication 4 ou 5, où le dispositif (100) est installé dans le but de procéder à une authentification d'un utilisateur du dispositif externe (200), pour la mise en place de l'accès à distance.

7. Dispositif (100) selon l'une quelconque des revendications précédentes, où la connexion USB (107, 108), outre une connexion optionnelle à l'alimentation en courant du dispositif (100), est l'unique connexion externe du dispositif (100).

8. Dispositif (100) selon l'une quelconque des revendications précédentes, où
- les cartes réseau (105, 106) sont des cartes Ethernet et/ou
- la mémoire (103) est un disque dur du type à l'état solide (SSD) et/ou
- le dispositif (100) comprend un système fonctionnel.

9. Dispositif (100) selon l'une quelconque des revendications précédentes, où le dispositif (100)
- est un ordinateur,
- un ordinateur personnel (PC),
- un mini-ordinateur personnel ou
- un ordinateur à petit facteur de forme (SFF).

10. Système comprenant un dispositif (100) selon l'une quelconque des revendications 1 à 9 et un dispositif externe (200).

11. Procédé dans un système qui présente un premier dispositif (100) et un second dispositif (200) externe par rapport au premier dispositif (100), où le premier dispositif (100) comprend une première carte réseau intégrée (105), une seconde carte réseau intégrée (106), une mémoire (103) stockant un pilote et un programme de mise en place et une connexion USB (107, 108) connectée de façon interne à la seconde carte réseau intégrée (106) et à la mémoire (103), ledit procédé comprenant :
- une identification automatique de la mémoire (103) par le second dispositif (200) quand le second dispositif (200) est connecté au premier dispositif (100), par la connexion USB (107, 108) ; et
- une installation du pilote pour la seconde carte réseau (106) dans le second dispositif (200), ladite installation étant provoquée par le programme de mise en place quand le programme de mise en place est exécuté par un processeur (201) du second dispositif (200).
